(19) Europäisches Patentamt
European Patent Office
Office européen des brevets

(11) **EP 2 373 201 B1**

(12) **EUROPEAN PATENT SPECIFICATION**

(45) Date of publication and mention
of the grant of the patent:
**31.05.2017 Bulletin 2017/22**

(51) Int Cl.:
*A47J 27/00* (2006.01)    *H05B 1/02* (2006.01)
*H05B 6/06* (2006.01)    *H05B 6/12* (2006.01)

(21) Application number: **09764678.0**

(22) Date of filing: **02.12.2009**

(86) International application number:
**PCT/US2009/066320**

(87) International publication number:
**WO 2010/074898 (01.07.2010 Gazette 2010/26)**

(54) **INDUCTION COOKWARE IDENTIFYING**

INDUKTIONSTOPFERKENNUNG

IDENTIFICATION DE RECIPIENT POUR CHAUFFAGE PAR INDUCTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.12.2008 US 335787**

(43) Date of publication of application:
**12.10.2011 Bulletin 2011/41**

(73) Proprietor: **Bose Corporation**
**Framingham, Massachusetts 01701 (US)**

(72) Inventors:
• **BARKER, Charles R.**
**Framingham, Massachusetts 01701 (US)**
• **BRODERS, Adam Christopher**
**Framingham, Massachusetts 01701 (US)**
• **ENGLAND, Raymond O.**
**Framingham, Massachusetts 01701 (US)**
• **ESPOSITO, Anthony G.**
**Framingham, Massachusetts 01701 (US)**
• **GIOMBETTI, Alfred G.**
**Framingham, Massachusetts 01701 (US)**
• **KITCHURA, JR, John Michael**
**Framingham, Massachusetts 01701 (US)**
• **NUSSBAUM, Michael**
**Framingham, Massachusetts 01701 (US)**
• **SCHROEDER, Laura J.**
**Framingham, Massachusetts 01701 (US)**

(74) Representative: **Attali, Pascal et al**
**BOSE**
**Intellectual Property**
**26-28 avenue de Winchester**
**78100 Saint Germain en Laye (FR)**

(56) References cited:
WO-A1-01/19141          WO-A1-01/19141
DE-A1- 2 551 187        US-A- 3 742 178
US-A- 4 523 083         US-A1- 2004 149 736
US-A1- 2004 149 736     US-A1- 2007 263 699

## Description

### BACKGROUND

This specification describes an induction cooking system. Some conventional cooking systems deliver heat to a cooking utensil (e.g., a pan, pot, skillet, etc.) by for example a gas flame or electric resistance coil. In these cooking systems, any material that lies between the heat source and the cooking utensil (e.g., a glass cooktop) is also heated. Induction cooking systems work differently. In an induction cooking system, an alternating current in an induction coil produces a time dependent magnetic field that induces eddy currents in electrically conductive materials near the coil, such as a ferromagnetic component (or the target material) of induction cooking utensils. As eddy currents flow within the target material, it becomes hot via a joule heating mechanism. Heat in the target is conducted through the body of the cooking utensil to the food surface, and the food is cooked. Unlike gas or electric cooking systems, induction cooking systems will not directly heat non-conductive materials (such as a glass cooktop) that are placed between the induction coil and the target material. However, any such non-conductive materials placed between the induction coil and the target material may be indirectly heated by the radiant, convective, or conductive heat emanating from the hot target material.

WO 01/19141 and D6 US 2004/149736 disclose prior art RFID-controlled induction heating systems.

### SUMMARY

The present invention relates to an induction cooking system as recited in the appended set of claims.

In one aspect, an item of cookware for use with an induction cooking system includes an element selected from a group consisting of ferrite chips, a passive resonant circuit, a material with a curie point that is in the temperature range of the operation of the induction cooking system, and a permanent magnet. The element is for coacting with the induction cooking system to identify the item of cookware. The item of cookware may contain more than one of ferrite chips, a passive resonant circuit, a material with a curie point that is in the temperature range of operation of the induction cooking system, and a permanent magnet for coacting with the induction cooking system to identify the item of cookware. The temperature of the outer surface of the cookware may be, in use, significantly lower than the temperature of the inner surface of the cookware.

In another aspect, a method for identifying induction cookware includes providing in material properties of the cookware, an indication that in use, the outer surface of the cookware is significantly lower than the inside surface of the cookware. The method may further include identifying the indication and conducting current in the coil to provide a time dependent magnetic field that induces eddy currents in the cookware to heat a surface of the cookware. The identifying the indication may be performed by a coil. The current in the coil may be dependent on the presence or absence of the indication. The material properties providing the indication may include the impedance signature of the cookware. The identifying the indication may include measuring the impedance of the element of cookware at a number of frequencies. The identifying the indication may include measuring the impedance of a passive resonant circuit in the cookware. The identifying the indication may include measuring the impedance of the element of cookware by measuring electrical parameters of a secondary coil. The providing may include inserting a passive resonant circuit in the cookware. The providing may include including in the cookware materials with varying curie points to provide an impedance signature. The providing may comprise including in the cookware a permanent magnet. The providing may include embedding ferrite chip in the cookware. The material properties may include the resonance frequency of a coil embedded in the cookware. The material properties may include the reactance of the cookware.

In another aspect, a process for operating an induction cooking system includes a plurality of methods for identifying an item of cookware. The plurality of methods for identifying the item of cookware may include a first method for identifying an item of cookware including one of transmitting RF radiation to a wireless network element in an item of cookware; measuring the reactance of the item of cookware; and detecting the presence of a permanent magnet in the element of cookware. The plurality of methods for identifying the item of cookware may include a second method for identifying cookware including one of transmitting RF radiation to a radio frequency identification (RFID) tag in the element of cookware; radiating RF radiation to a wireless communication element in the element of cookware; measuring the impedance of the cookware; measuring the reactance of the cookware; detecting the presence of a permanent magnet in the item of cookware; and detecting a resonant frequency of a resonant coil in the element of cookware.

Other features, objects, and advantages will become apparent from the following detailed description, when read in connection with the following drawing, in which:

### BRIEF DESCRIPTION OF THE SEVERAL VIEWS OF THE DRAWING

Fig. 1 is a diagrammatic view of an induction cooking system;

Fig. 2 is a block diagram of a process for operating an induction cooking system;

Figs. 3, 4, and 5A are diagrammatic views of an induction cooking system;

Fig. 5B is a circuit diagram of a the induction cooking system of Fig. 5A;

Fig. 6 is a diagrammatic view of an induction cooking system;

Fig. 7A is a diagrammatic view of a portion of the induction cooking system of Fig. 6;

Fig. 7B is a view of elements of the view of Fig. 7A;

Figs. 7C and 7D are circuit diagrams of some elements of the induction cooking system of Fig. 7A;

Fig. 7E is a circuit diagram of a circuit for measuring reactance; and

Fig. 8 is a block diagram of an induction cooking system.

DETAILED DESCRIPTION

Though the elements of several views of the drawing may be shown and described as discrete elements in a block diagram and may be referred to as "circuitry", unless otherwise indicated, the elements may be implemented as one of, or a combination of, analog circuitry, digital circuitry, or one or more microprocessors executing software instructions. Operations may be performed by analog circuitry or by a microprocessor executing software that performs the mathematical or logical equivalent to the analog operation.

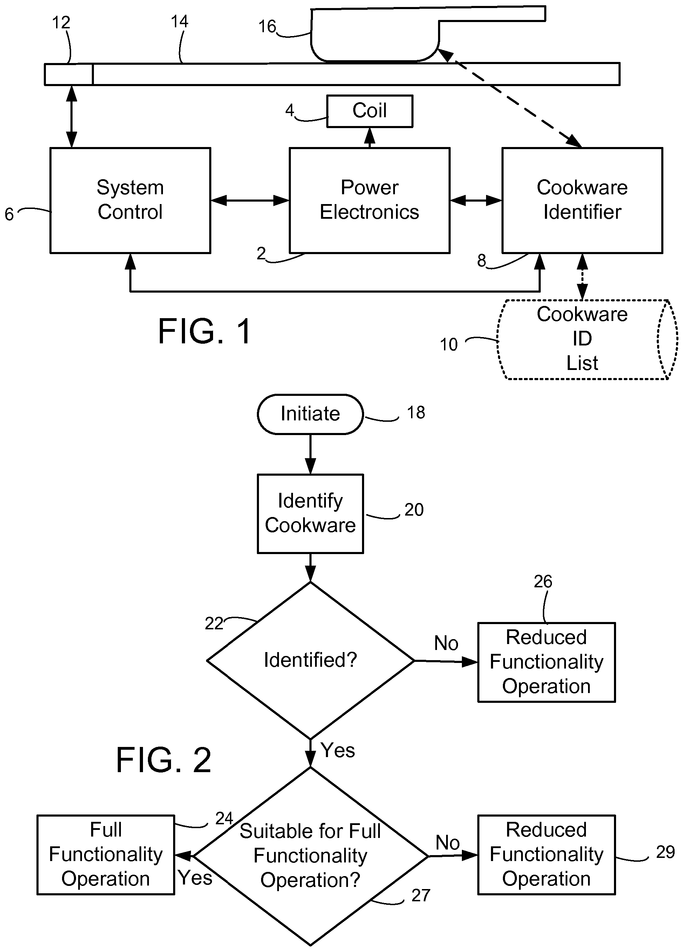

Fig. 1 shows an induction cooking system. Power electronics circuitry 2 is operationally coupled to a primary induction coil 4, system control circuitry 6, and cookware identifier circuitry 8. Cookware identifier circuitry 8 may be operationally coupled to a data base 10 including a cookware identity (ID) list and to system control circuitry 6. A user interface (UI) 12 is operationally coupled to system control circuitry 6. Cooktop 14 interfaces the primary induction coil 4 with cookware 16. Figs. 1, 3, 4, 5A, and 6 show the system in logical form. In an actual implementation, the elements may share components, and elements that perform the activities of a block may be physically separated. For example, cookware identifier circuitry 8 may include elements of the power electronics circuitry 2.

The cookware 16 may be of the type described in U.S. Pat. App. 12/031,214, U.S. Pat. App. 12/031,220 or in U.S. Pat. 12/031,226. An outer wall this type of cookware can be relatively cool to the touch, even if an inner wall is at a temperature sufficient to cook food. Such cookware will be hereinafter referred to as "cool cookware". If the cookware 16 is non-cool cookware, the outer wall may be nearly as hot as the inner wall. If a user mistakes non-cool cookware for cool cookware, burns and/or damage to surfaces on which the cookware is placed may result. The use of cool cookware permits greater flexibility in the design of the cooktop 14. The cooktop does not need to be as heat tolerant as the cooktop of a conventional induction cooking surface, which permits the use of different materials for the cooktop, dimensions of the cooktop, and other advantages. Cookware 16 is provided with an identifying characteristic so that the cookware identifying circuitry 8 can identify the cookware. Identifying characteristics may include a specific impedance or impedance signature, an element that can respond to a radio frequency (RF) signals or can interact with a wireless network, a characteristic reactance, or a characteristic resonance frequency. More detailed specific examples of identifying characteristics will be described below.

The operation of the system of Fig. 1 is described in Fig. 2. At block 18 the process is initiated, for example, by the cooking system sensing the presence of the cookware 16 or by a user entering a command through the user interface 12 which is communicated to the system control circuitry 6. At block 20, the cookware identifier circuitry attempts to identify the cookware. In attempting to identify the cookware, the cookware identifier circuitry may interact with the cookware as indicated by the dashed line between the cookware identifier circuitry 8 and the cookware 16 in Fig. 1. The nature of the interaction will be described below. At block 22, it is determined if the cookware has been identified. If the cookware has been identified at block 22, at block 27, it is determined if the cookware is suitable for full functionality operation of the induction heating system as will be described below. If the cookware is not identified at block 22, at block 26 the system control circuitry may cause the system to operate with reduced functionality. If it is determined at block 27 that the cookware is not suitable for full functionality operation, at block 29 the system control circuitry may cause the system to operate with reduced functionality. If it is determined at block 27 that the cookware is suitable for full functionality operation, at block 24 the system control circuitry directs the power electronics circuitry to operate with full functionality, by supplying power to the primary induction coil 4, which creates a magnetic field which causes eddy currents in cookware 16, which causes the cookware to heat. "Reduced functionality" may include operating with reduced maximum power or providing no power to the primary induction coil, limitations on some features of the induction cooking system, or a warning to the user. The reduced functionality provided at block 26 may be the same or different than the reduced functionality provided at block 29.

In one embodiment, "identified" means a binary identification of the cookware as being or not being cool cookware. This embodiment (hereinafter referred to as a "binary identification embodiment") does not permit as sophisticated a tailoring of the reduced functionality as the embodiment described below, but can operate with simpler cookware identifier circuitry 8 and does not require the cookware ID list 10.

In another embodiment, "identified" means that the specific identity, for example, a specific product code, manufacturer, model number or the like, of the cookware has been determined. If the specific identity of the cookware has been determined, the specific identity of the cookware can be compared with the cookware identity list 10 to determine the features of the cookware. Alternatively, the features of the cookware can be indicated directly by the identification scheme. For example, a specific identification scheme could indicate that the item of cookware is cool cookware and could also directly indicate the manufacturer, the dimensions, and other information about the cookware. This embodiment (hereinafter referred to as a "specific identification embodiment") permits full functionality operation to include more sophisticated features and also permits a sophisticated tailoring of the reduced functionality of the operation at block 29. For example, if it the cookware is not suitable for induction cooking, then the system control circuitry 6 can cause the power electronics circuitry 2 to provide no power to the induction coil 4 and provide visual and/or auditory indication that the cookware is not suitable for induction cooking; if the cookware is suitable for induction cooking, but is not cool cookware, the system control circuitry 6 can limit the maximum power that the power electronics circuitry 2 provides to the coil 4 and/or provide visual or auditory indication that the cookware is not cool cookware; or if the cookware is cool cookware (which includes being suitable for induction cooking), the system control circuitry 6 can provide full maximum power to the coil 4.

Many other embodiments of varying degrees of complexity and sophistication are possible. For example, a binary identification embodiment can make binary classifications instead of or in addition to whether or not the cookware is cool cookware. In some cases, the type of binary classification may lend itself to measurement with specific types of sensors.

An induction cooking system according to Figs. 1 and 2 may prevent or lessen the risk of burns or damage to surfaces by preventing the conventional cookware from heating at all; by reducing the maximum power to the primary induction coil, which permits the cookware to heat, but not to a temperature that would cause serious burns; or by warning the user that the cookware may be hot. Additionally, if the cookware is non-cool cookware, the cooking system may limit or eliminate some features.

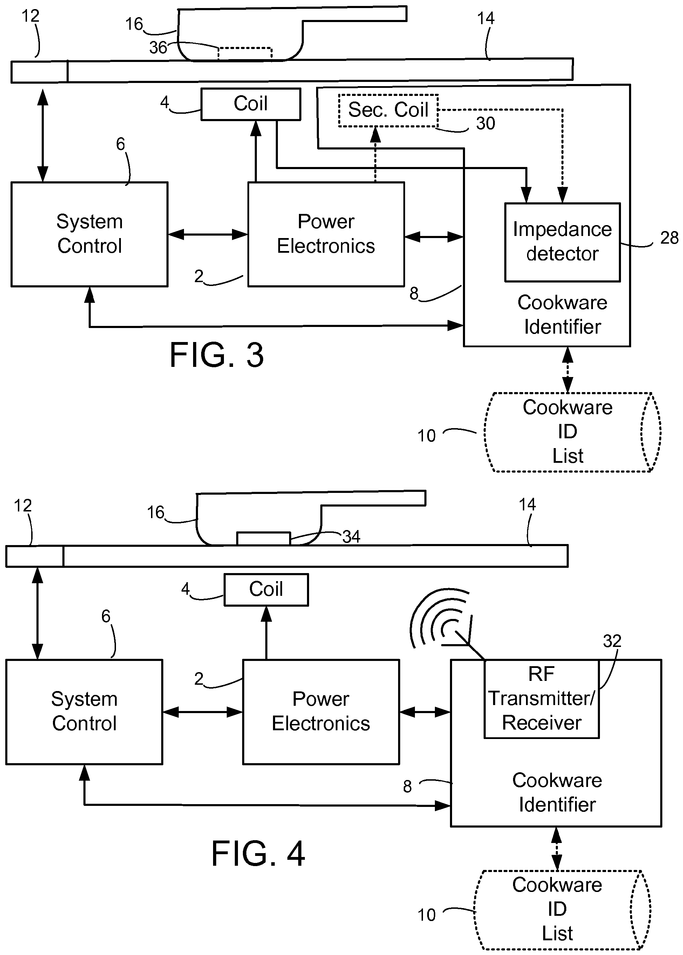

Fig. 3 shows an implementation of the induction cooking system of Fig. 1, with the cookware identifier circuitry 8 in more detail. The cookware identifier circuitry 8 includes an impedance detector 28. The cookware 16 may include a passive resonant circuit 36 and the cookware identifier circuitry may include a secondary coil 30, that is, coil in addition to the primary induction coil whose function is something other than producing a magnetic field that induces eddy currents in electrically conductive materials near the coil. In one implementation of the cooking system, the impedance detector determines an impedance of the cookware 16 by measuring the voltage across and the current through the primary induction coil 4 at a frequency. In one variation, the impedance detector determines an impedance signature by measuring the impedance at a plurality of frequencies. In another variation, the impedance detector measures the impedance of the optional passive resonant circuit 36. In another variation, the impedance detector detects the impedance at a plurality of temperatures. In another variation, the impedance detector measures the impedance by measuring the current through and the voltage across the secondary coil 30. The variations can be combined; for example, the impedance detector may measure, at a number of frequencies, current through and voltage across a secondary coil to determine the impedance of passive resonant circuits to determine an impedance signature of the cookware; or the impedance detector can measure the impedance at a number of frequencies and at a number of temperatures. Measuring the impedance by measuring the current and voltage across the primary induction coil 4 at a single frequency requires the fewest components and the simplest circuitry. The variations may require more components and more complex circuitry, but permit more sophisticated identification schemes.

The impedance of the cookware may be altered to produce a unique impedance or impedance signature in a number of ways. The dimensions and geometry of the cookware can be modified; the material of the cookware can be varied; ferrite chips may be embedded in the cookware; and in other ways, such as inserting a resonant circuit in the cookware.

An example of modifying the geometry of the cookware is constructing the cookware so that there is a gap between the induction target and the cooktop. Examples of varying the material of the cookware include using layers of dielectric material in the cookware and using materials, for example alloys of nickel, chromium, and iron, with varying curie points. The curie point is the temperature at which a ferromagnetic material loses its ferromagnetic properties. The loss of ferromagnetic properties results in a loss of the ability to support low frequency (20 - 30 kHz) induction heating, leading to a dramatic change in the system impedance. Ferrite chips, for example low temperature ferrites can be incorporated into the cookware, for example by adhering them to the bottom of the target portion of the cookware. A low temperature ferrite has a low curie temperature which results in a characteristic low temperature impedance response.

In the implementation of Fig. 3, if the system includes a cookware ID list, the entries of the cookware ID may be cataloged according to impedances or impedance signatures. The implementation of Fig. 3 is suitable for either a specific identification embodiment, as defined above, but is especially suitable for a binary identification embodiment, as defined above. Impedance can be measured relatively simply, using elements (for example the coil 4) that have other functions, such as providing the time dependent magnetic field that induces eddy currents in electrically conductive materials near the coil. Since a binary identification embodiment does not require the transfer of large amount of data, a relatively simple coding scheme can be used so that a material property of the cookware, such as the impedance or impedance signature, can be used to transmit information in addition to the material property itself. Stated differently a material property such as the impedance or impedance signature can be used to encode information that is independent of the material property. For example, a specific impedance profile could indicate whether or not the cookware is cool cookware. Conventional induction cooking cookware detects information about the material properties that is directly related to the material property. For example, some conventional induction cooking systems measure the impedance signature of the cookware to determine if the cookware includes magnetic material or not. In this case, the impedance signature is a direct indicator of whether or not the cookware contains magnetic material.

Fig. 4 shows another implementation of the induction cooking system of Fig. 1. In the implementation of Fig. 4, the cookware identifier circuitry includes an RF device 32. The cookware 16 includes an identifier 34 that can coact with the RF device to identify the cookware.

In one form of the implementation of Fig. 4, the RF device 32 is an RFID transponder and the identifier 34 is an RFID tag. In another form of the implementation of Fig. 4, the RF device 32 and the identifier 34 are both elements of a wireless communications system, for example, a "Bluetooth" system (url www.bluetooth.org or www.bluetooth.org) or a Zigbee system (Advantage Electronics Product Development, Inc. of Broomfield, Colorado, USA www.advantage-dev.com ).

An implementation incorporating RFID devices or elements of a wireless communication system is also suitable for a binary identification embodiment, but is particularly suitable for a specific identification embodiment, because the more extensive communication capabilities of an RFID or wireless communications network permits the efficient transmission of larger amounts of information than does a simpler scheme such as measuring impedance signatures.

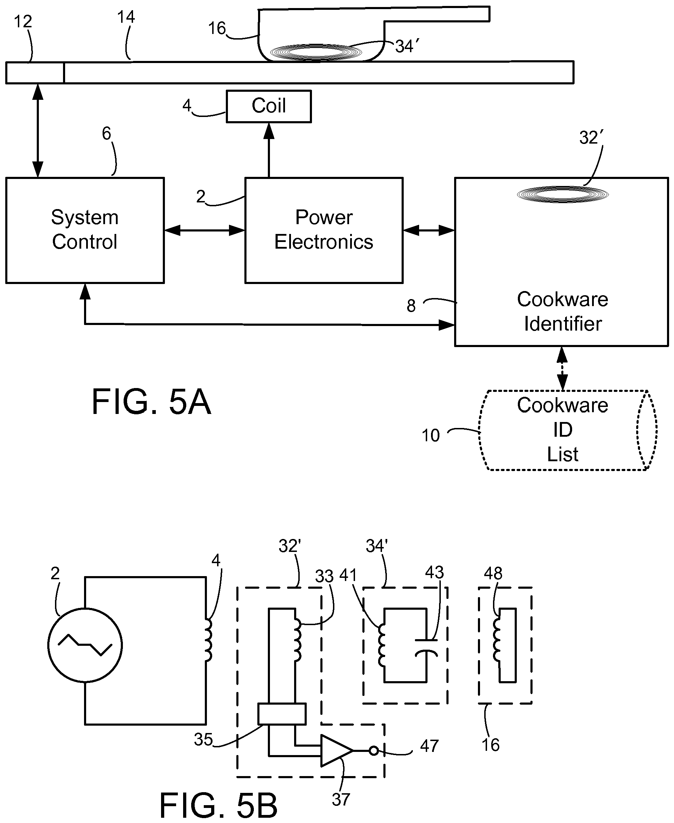

In another form of the implementation of FIG. 4, the RF device 32 may be a receiver, antenna, or some other device that detects electromagnetic radiation from the identifier 34. An example of this form of implementation, with other elements, is shown in FIG. 5A.

In the example of FIG. 5A, the identifier 34 of Fig. 4 is a resonant circuit 34', for example a resonant coil, embedded in, or attached to, the cookware. RF device 32 of Fig. 4 may be a receiver coil 32'. Resonant circuit 34' is in the form of a coil with a shunting capacitance. The coil has a characteristic inductance that is generally defined by its mean diameter and quantity of turns. The resulting circuit with the inductance of the coil in parallel with the capacitance has a theoretical resonant frequency $f$ of $f = \dfrac{1}{2\pi\sqrt{LC}}$ , where the resonant frequency is expressed in Hz, the inductance $L$ is expressed in Henries, and the capacitance $C$ is expressed in Farads. The resonant frequency of an actual example may differ slightly due to non-theoretical behavior and tolerance differences. In one example, $L$ is 6 μH, $C$ is 1000 pF, and the coil has five turns with a diameter of about 11.4 cm (4.5 inches), so that $f$ is approximately 2 MHz. In another example, $L$ is 2.5 μH, $C$ is 100 pF, and the coil has four turns with a diameter of about 8.9 cm (3.5 inches), so that $f$ is approximately 10 MHz.

Fig. 5B is a schematic diagram of some elements of the system of Fig. 5A. Some of the reference numbers identify the corresponding elements of Fig. 5A. Inductance 48 represents the inductance of the target material of the cookware 16 of Fig. 5A. Resonant circuit 34' of Fig. 5A is represented in Fig. 5B as an inductance 41 and a capacitance 43. Receiver coil 32' of Fig. 5A is represented as an inductance 33, a noise filter 35, and an amplifier 37.

In operation, the induction coil 4 is powered at a very low power level so that that the coil 4 radiates at a fundamental frequency (for example 30 kHz) and also radiates harmonic and noise spectra. Typically, the receiver coil 32' detects a reference signal level of about -60dB at output terminal 47. However, the noise at the resonance frequency of the resonant circuit 34' causes the resonant circuit 34' to radiate at the resonant frequency, in this example 1 MHz, many times greater in magnitude than the magnitude of the noise at that frequency. So at 1 MHz, the receiver coil 32' detects a reference signal of -30dB at output terminal 47, providing a binary identification of the cookware 4. A specific identification scheme (or a more robust binary identification system) could be developed by providing additional resonant circuits with different resonance frequencies.

Using an identification method that includes an identifier 34 or 34', such as an RFID tag or a resonant coil, is particularly suited to use with cool cookware. The heat tolerance of the identifier does not need to be a consideration and the identifier can be positioned anywhere on a cool surface. For example, the identifier can be centered on the bottom surface of the cookware. When used with conventional induction cooking cookware, an identifier would either need to be heat tolerant or would need to be placed in a location that is cool in use, for example in a handle. Placing the identifier in a handle is undesirable because a handle is typically several centimeters from the cooktop and therefore from the identification circuitry and because the handle, in use, may be in different orientations relative to the identification circuitry.

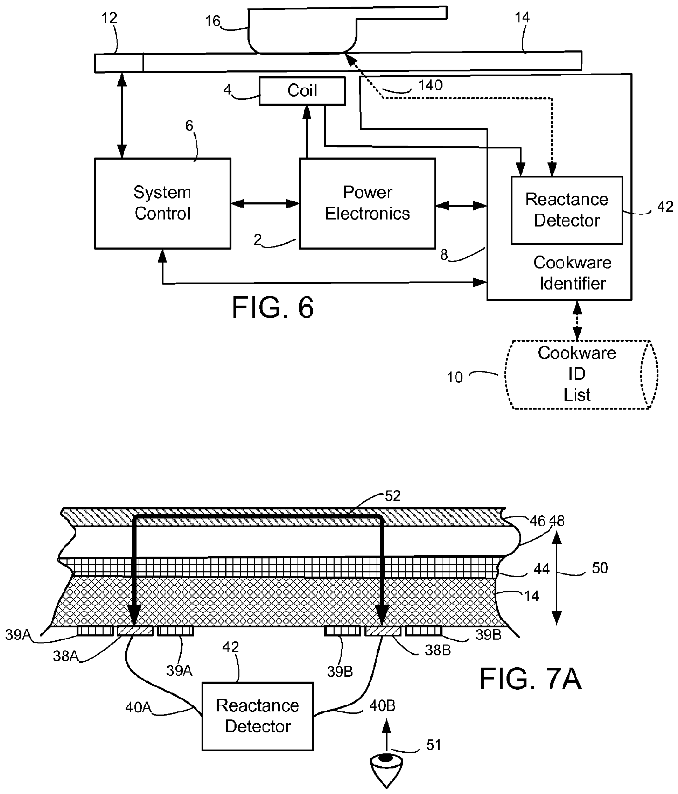

In the implementation of FIG. 6, the cookware identifier circuitry 8 includes a reactance (capacitive impedance) detector 42. The reactance detector 42 is operationally coupled to the cookware 16 as indicated by line 140.

As described in U.S. Patent App. 12/031,214, U.S. Pat. App. 12/031,220 or in U.S. Pat. 12/031,226, an induction cooking system equipped to use cool cookware may have several physical characteristics that are different from induction cooking systems that are not equipped to use cool cookware. The physical characteristics may cause the capacitive impedance (hereinafter "reactance") to differ from conventional induction cooking systems. The cool cookware may have a non-conductive outer surface including a dielectric material such as glass ceramic, glass, or plastic. The cool cookware may include a vacuum or inert gas layer between the outer surface 44 and the cookware conductive layer. The cooktop may be made of different material and have different dimensions than cooktops of conventional induction cooking systems because cooktops designed for usage with cool cookware do not need to be as heat resistant as cooktops designed for usage with conventional cookware. The combined effect of the non-conductive layers (which may include a vacuum or inert gas layer) may mean that the conductive layer of the cookware is farther from the induction coil than conventional induction cooking cookware, which also affects reactance. The different reactance of cool cookware system components permits an induction cooking system as shown in Fig. 6 to use a reactance detector 42 as a cookware identifier.

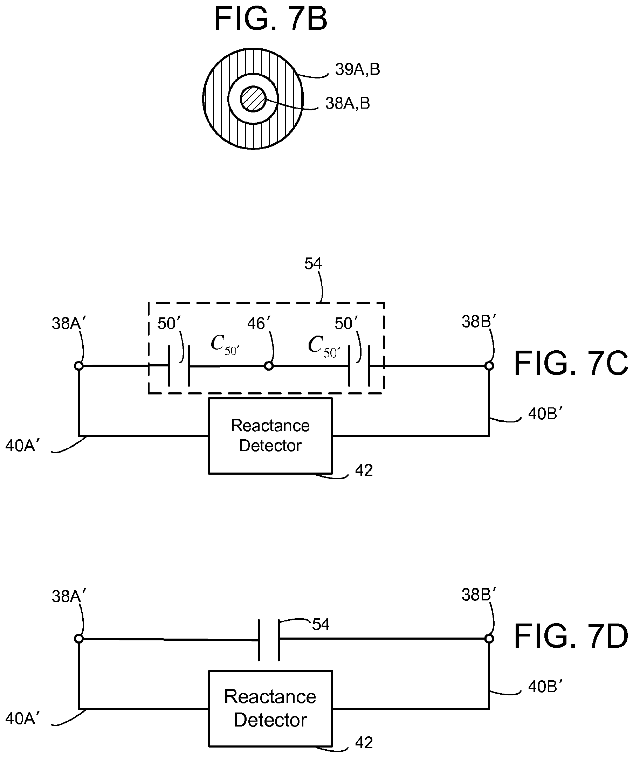

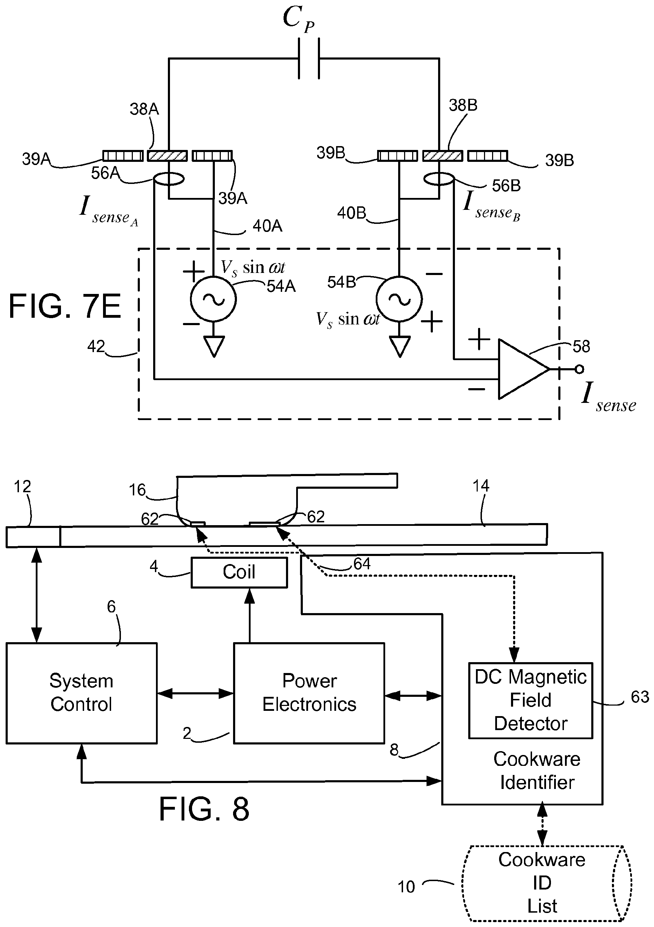

Fig. 7A shows a cutaway diagrammatic view of some elements of Fig. 6 in greater detail. The cookware has a conductive layer 46 of a material suitable for induction cooking and may have an outer layer 44 of a dielectric material. The cookware may have intervening layers represented by layer 48, for example vacuum layers, inert gas layers, and reflective layers as described in U.S. Patent App. 12/031,214, U.S. Pat. App. 12/031,220 or in U.S. Pat. 12/031,226. Reactance detection circuitry including reactance detector 42, reactance sensing targets 38A and 38B, reactance guard rings 39A and 39B, and reactance detector leads 40A and 40B may be positioned so that the cooktop 14 is between the reactance sensing targets and the conductive layer 46. Collectively, layers between sensing targets 38A and 38B and conductive layer 46, in this view cooktop 14, outer layer 44, and intervening layers 48, are referred to in Fig. 7D below as collective layer 50. The coupling of the reactance detector and the reactance guard rings 39A and 39B will be shown below in Fig. 7E.

Fig. 7B shows a diagrammatic view of the reactance sensing target 38A or 38B and guard rings 39A or 39B as viewed in the direction indicated by indicator 51 of FIG. 7A. The guard ring 39A or 39B surrounds the sensing target 38A or 38B to eliminate stray capacitance to ensure that the reactance measurement is along path 52 of Fig. 7A.

Fig. 7C shows the equivalent electrical circuit of the arrangement of FIG. 7A. The reference numbers with the " ' " (prime) indicator refer to the electrical equivalent of the like numbered elements of FIGS. 7A and 7B. The circuit is equivalent to two capacitors in series, each with a capacitance of $C_{50'}$. As shown in Fig. 7D, the two capacitors in series can be represented by a single capacitance 54, with a capacitance $C_P$ of

$$C_P = \frac{1}{\dfrac{1}{C_{50'}} + \dfrac{1}{C_{50'}}} = \frac{C_{50'}}{2}.$$ The capacitance 54 has a reactance signature substantially different than the reactance signature of the equivalent circuit of a cookware item that does not have the physical features shown in FIG. 7A, or in which the metal layer is a different distance from the cooktop. An element of cookware according to the arrangement of Fig. 7A can therefore be identified by its reactance pattern.

In Figs. 7A - 7D, reactance detector 42 is shown as a functional block in a block diagram. One circuit for measuring the reactance is shown schematically in Figs. 7E. Current sensor 42 includes a sinusoidal voltage source 54A coupled to capacitance target 38A and sinusoidal voltage source 54B coupled to capacitance target 38B with the polarity reversed from the coupling of voltage source 54A and capacitance target 38A. The current in leads 40A and 40B is sensed by current sensors 56A and 56B, respectively, differentially summed at element 58 to provide a sensed current $I_{sense}$. The capacitance

can then be determined according to $C_P = \dfrac{I_{sense}}{2V_s j\omega}$ .

The frequency of the sinusoidal voltage source is varied to obtain a reactance pattern.

In the implementation of FIG. 8, one or more permanent magnets 62 are embedded in, or attached to, the cookware 16. The permanent magnets 62 result in the existence of a DC magnetic field, that is a magnetic field that is time independent. The cookware identifier circuitry 8 includes a DC magnetic field detector 63. The DC magnetic field detector 63 is operationally coupled to the permanent magnets 62 as indicated by lines 64. The DC magnetic field detector may include, for example, one or more Hall Effect sensors. An implementation including more than one permanent magnet 62 with varying size, geometry and magnetic field strength and including more than one Hall Effect sensor permits a more reliable, robust, and sophisticated identification of the cookware. For an implementation using permanent magnets, it is desirable to select the magnetic material and other system components so that the permanent magnets 62 do not perturb AC parameters and thereby overheat. For example, the magnetic material should have low resistivity so that eddy currents do not form in the permanent magnets.

Some of the identification methods described above may be prone to misidentification, either due to "spoofing", that is, intentionally designing an item of cookware so that it is mistakenly identified, or due to coincidental similarity or due to an item of non-cool cookware coincidentally having similar material characteristics to cool cookware. For example, if the identification system is the reactance measuring system described in Figs. 6 and 7, an item of non-cool cookware could be designed so that it has a reactance that is similar to an item of cool cookware or it could coincidentally have a similar reactance. The probability of misidentification can be alleviated by using more than one method of identification, for example, the reactance method of Figs. 6 - 7B and in addition, determining the resonant frequency of a resonant coil in the item of cookware, as described in Figs. 5A and 5B.

A number of embodiments of the invention have been described. Modification may be made without departing from the scope of the invention, and accordingly, other embodiments are in the claims.

## Claims

1. An induction cooking system comprising:

   an induction hob (14) with a control system (6);
   an induction coil (4) for heating cookware; and
   a cookware identifier (8) comprising a radio frequency (RF) communication circuit (32);
   wherein
   the cookware identifier is configured to identify whether an item of cookware (16) is of a type wherein the temperature of the outer surface of the cookware is, in use, significantly lower than the temperature of the inner surface of the cookware,
   in response to the cookware identifier determining that an item of cookware is of the described type, the control system is configured to provide full power to the induction coil, and
   in response to the cookware identifier determining that an item of cookware is not of the described type, the control system is configured to provide no power or limit the maximum power that is applied to the induction coil.

2. The induction cooking system of claim 1, wherein in response to the cookware identifier (8) determining that an item of cookware (16) is not of the described type and is not suitable for induction cooking, the control system is configured to provide no power to the induction coil, and
   in response to the cookware identifier determining that an item of cookware is not of the described type but is suitable for induction cooking, the control system is configured to provide to limit the maximum power that is applied to the induction coil to a temperature that permits the item of cookware to heat without causing burns or damage to surfaces of the item of cookware.

3. The induction cooking system of claim 1 or 2, wherein in response to the cookware identifier (8) determining that an item of cookware (16) is not of the described type, the control system is configured to provide a warning to a user, such as a visual and/or auditory indication that the item of cookware may be hot.

4. The induction cooking system of claim 1 wherein the RF communication circuit (32) comprises one or more of an RFID tag reader or a component of a wireless communication system.

5. The induction cooking system of claim 1 wherein the RF communication circuit (32) determines that the item of cookware (16) is of the specified type by receiving a binary indication.

6. The induction cooking system of claim 1 wherein the RF communication circuit (32) determines that the item of cookware (16) is of the specified type by receiving an identification of the make or model of the cookware.

7. The induction cooking system of claim 1 wherein the RF communication circuit (32) comprises the induction coil and a receiver coil, wherein the receiver coil interacts with a complementary coil in the cookware and measures whether the coil in the cookware has a characteristic inductance and resonant frequency that specifically indicate to the induction cooking system that the item of cookware is of the specified type, when the coil in the cookware is energized by the induction coil.

8. The induction cooking system of claim 7 wherein if the cookware further comprises a second resonant coil, wherein the second coil has a second resonant frequency different from that of the first coil, the identification circuit determines additional information about the cookware from the second resonant frequency.

9. The induction cooking system of claim 1, further comprising an item of cookware (16).

## Patentansprüche

1. Induktionsgarsystem, das Folgendes umfasst:

   ein Induktionskochfeld (14) mit einem Steuersystem (6);
   eine Induktionsspule (4) zum Erhitzen von Kochgeschirr; und

einen Kochgeschirridentifikator (8), der eine Funkfrequenz (HF)-Kommunikationsschaltung (32) umfasst;

wobei

der Kochgeschirridentifikator konfiguriert ist, um zu identifizieren, ob ein Kochgeschirr (16) zu einem Typ gehört, bei dem die Temperatur der äußeren Oberfläche des Kochgeschirrs beim Gebrauch signifikant niedriger ist als die Temperatur der inneren Oberfläche des Kochgeschirrs,

als Reaktion darauf, dass der Kochgeschirridentifikator bestimmt, dass ein Kochgeschirr zu dem beschriebenen Typ gehört, das Steuersystem konfiguriert ist, um volle Leistung zu der Induktionsspule zu liefern, und

als Reaktion darauf, dass der Kochgeschirridentifikator bestimmt, dass ein Kochgeschirr nicht zu dem beschriebenen Typ gehört, das Steuersystem konfiguriert ist, um keine Leistung zu liefern oder die maximale Leistung, die an die Induktionsspule angelegt wird, zu begrenzen.

2. Induktionsgarsystem nach Anspruch 1, wobei als Reaktion darauf, dass der Kochgeschirridentifikator (8) bestimmt, dass ein Kochgeschirr (16) nicht zu dem beschriebenen Typ gehört und nicht für Induktionsgaren geeignet ist, das Steuersystem konfiguriert ist, um keine Leistung zu der Induktionsspule zu liefern, und

als Reaktion darauf, dass der Kochgeschirridentifikator bestimmt, dass ein Kochgeschirr nicht zu dem beschriebenen Typ gehört, aber für Induktionsgaren geeignet ist, das Steuersystem konfiguriert ist, die maximale Leistung, die an die Induktionsspule angelegt wird, auf eine Temperatur zu begrenzen, die es dem Kochgeschirr erlaubt, sich zu erwärmen, ohne Verbrennungen oder Schäden an Oberflächen des Kochgeschirrs zu verursachen.

3. Induktionsgarsystem nach Anspruch 1 oder 2, wobei als Reaktion darauf, dass der Kochgeschirridentifikator (8) bestimmt, dass ein Kochgeschirr (16) nicht zu dem beschriebenen Typ gehört, das Steuersystem konfiguriert ist, um einem Benutzer eine Warnung bereitzustellen, wie zum Beispiel einen visuellen und/oder Audiohinweis, dass das Kochgeschirr eventuell heiß ist.

4. Induktionsgarsystem nach Anspruch 1, wobei die HF-Kommunikationsschaltung (32) einen RFID-Tag-Leser und/oder ein Bauteil eines drahtlosen Kommunikationssystems umfasst.

5. Induktionsgarsystem nach Anspruch 1, wobei die HF-Kommunikationsschaltung (32) bestimmt, dass das Kochgeschirr (16) zu dem spezifizierten Typ gehört, indem sie eine binäre Angabe empfängt.

6. Induktionsgarsystem nach Anspruch 1, wobei die HF-Kommunikationsschaltung (32) bestimmt, dass das Kochgeschirr (16) zu dem spezifizierten Typ gehört, indem sie eine Identifikation der Marke oder des Modells des Kochgeschirrs empfängt.

7. Induktionsgarsystem nach Anspruch 1, wobei die HF-Kommunikationsschaltung (32) die Induktionsspule und eine Empfängerspule umfasst, wobei die Empfängerspule mit einer komplementären Spule in dem Kochgeschirr in Wechselwirkung tritt und misst, ob die Spule in dem Kochgeschirr eine charakteristische Induktanz und Resonanzfrequenz hat, die dem Induktionsgarsystem spezifisch angeben, dass das Kochgeschirr zu dem spezifizierten Typ gehört, wenn die Spule in dem Kochgeschirr von der Induktionsspule erregt wird.

8. Induktionsgarsystem nach Anspruch 7, wobei, falls das Kochgeschirr ferner eine zweite Resonanzspule umfasst, wobei die zweite Spule eine zweite Resonanzfrequenz hat, die von der der ersten Spule unterschiedlich ist, die Identifikationsschaltung zusätzliche Informationen über das Kochgeschirr aus der zweiten Resonanzfrequenz bestimmt.

9. Induktionsgarsystem nach Anspruch 1, das ferner ein Kochgeschirr (16) umfasst.

**Revendications**

1. Système de cuisson à induction comprenant :

une plaque de cuisson à induction (14) avec un système de commande (6) ;
une bobine d'induction (4) pour un chauffage de batterie de cuisine ; et
un identifiant de batterie de cuisine (8) comprenant un circuit de communication de radiofréquences (RF) (32) ;

dans lequel

l'identifiant de batterie de cuisine est configuré pour identifier si un article de batterie de cuisine (16) est d'un type dans lequel la température de la surface extérieure de la batterie de cuisine est, en utilisation, significativement inférieure à la température de la surface intérieure de la batterie de cuisine,

en réponse à l'identifiant de batterie de cuisine déterminant qu'un article de batterie de cuisine est du type d'écrit, le système de commande est configuré pour fournir une puissance maximale à la bobine d'induction, et

en réponse à l'identifiant de batterie de cuisine déterminant qu'un article de batterie de cuisine n'est pas du type décrit, le système de commande est configuré pour ne pas fournir de puissance ou pour limiter la puissance maximale qui est appliquée à la bobine d'induction.

2. Système de cuisson à induction selon la revendication 1, dans lequel en réponse à l'identifiant de batterie de cuisine (8) déterminant qu'un article de batterie de cuisine (16) n'est pas du type décrit et n'est pas approprié pour une cuisson à induction, le système de commande est configuré pour ne pas fournir de puissance à la bobine d'induction, et

en réponse à l'identifiant de batterie de cuisine déterminant qu'un article de batterie de cuisine n'est pas du type décrit mais est approprié pour une cuisson à induction, le système de commande est configuré pour limiter la puissance maximale qui est appliquée à la bobine d'induction à une température permettant à l'article de batterie de cuisine de chauffer sans provoquer de brûlures ou de détériorations de surfaces de l'article de batterie de cuisine.

3. Système de cuisson à induction selon la revendication 1 ou 2, dans lequel, en réponse à l'identifiant de batterie de cuisine (8) déterminant qu'un article de batterie de cuisine (16) n'est pas du type décrit, le système de commande est configuré pour fournir un avertissement à un utilisateur, comme une indication visuelle et/ou auditive que l'article de batterie de cuisine peut être chaud.

4. Système de cuisson à induction selon la revendication 1, dans lequel le circuit de communication RF (32) comprend un ou plusieurs d'un lecteur d'étiquette RFID ou d'un composant d'un système de communication sans fil.

5. Système de cuisson à induction selon la revendication 1, dans lequel le circuit de communication RF (32) détermine que l'article de batterie de cuisine (16) est du type spécifié par la réception d'une indication binaire.

6. Système de cuisson à induction selon la revendication 1, dans lequel le circuit de communication RF (32) détermine que l'article de batterie de cuisine (16) est du type spécifié par la réception d'une identification de la marque ou du modèle de la batterie de cuisine.

7. Système de cuisson à induction selon la revendication 1, dans lequel le circuit de communication RF (32) comprend la bobine d'induction et une bobine réceptrice, dans lequel la bobine réceptrice interagit avec une bobine complémentaire dans la batterie de cuisine et mesure si la bobine dans la batterie de cuisine a une inductance caractéristique et une fréquence résonnante indiquant spécifiquement au système de cuisson à induction que l'article de batterie de cuisine est du type spécifié, lorsque la bobine dans la batterie de cuisine est mise sous tension par la bobine d'induction.

8. Système de cuisson à induction selon la revendication 7, dans lequel, si la batterie de cuisine comprend en outre une deuxième bobine résonnante, dans lequel la deuxième bobine a une deuxième fréquence résonnante différente de celle de la première bobine, le circuit d'identification détermine des informations supplémentaires relatives à la batterie de cuisine à partir de la deuxième fréquence résonnante.

9. Système de cuisson à induction selon la revendication 1, comprenant en outre un article de batterie de cuisine (16).

FIG. 1

FIG. 2

FIG. 3

FIG. 4

FIG. 5A

FIG. 5B

FIG. 6

FIG. 7A

# FIG. 7B

39A,B

38A,B

54

38A′  50′  46′  50′  38B′

$C_{50'}$  $C_{50'}$

# FIG. 7C

40B′

40A′

Reactance
Detector

42

38A′  38B′

54

# FIG. 7D

40B′

40A′

Reactance
Detector

42

FIG. 7E

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0119141 A
- US 2004149736 A
- US 031214 A
- US 031220 A
- US 12031226 B